(19) **Europäisches Patentamt / European Patent Office / Office européen des brevets**

(11) **EP 2 753 105 B1**

(12) **EUROPEAN PATENT SPECIFICATION**

(45) Date of publication and mention of the grant of the patent:
**26.06.2019 Bulletin 2019/26**

(51) Int Cl.:
**H04W 68/02** (2009.01)

(21) Application number: **12827850.4**

(22) Date of filing: **03.09.2012**

(86) International application number:
**PCT/CN2012/080907**

(87) International publication number:
**WO 2013/029565 (07.03.2013 Gazette 2013/10)**

(54) **CLUSTER COMMUNICATION PAGING METHOD AND RELATED DEVICE**

CLUSTERKOMMUNIKATIONS-PAGING-VERFAHREN UND VORRICHTUNG DAFÜR

PROCÉDÉ DE RADIOMESSAGERIE POUR COMMUNICATION EN GRAPPES ET DISPOSITIF APPARENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2011 CN 201110258791**

(43) Date of publication of application:
**09.07.2014 Bulletin 2014/28**

(73) Proprietor: **Huawei Technologies Co., Ltd.
Longgang District
Shenzhen, Guangdong 518129 (CN)**

(72) Inventors:
• **XIONG, Xin
  Shenzhen
  Guangdong 518129 (CN)**
• **ZHANG, Lixue
  Shenzhen
  Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**EP-A1- 1 909 524       EP-A1- 1 956 851
EP-A1- 1 968 226       CN-A- 101 111 051
CN-A- 101 309 463       US-A1- 2010 022 257
US-A1- 2010 022 257**

• **'ETSI TS 136.304 V9.1.0, Technical specification, LTE; Evolved Universal Terrestrial Radio Access (E-UTRA); User Equipment (UE) procedures in idle mode' 3GPP TS 136.304 VERSION 9.1.0 RELEASE 9 February 2010, page 27, XP050401612**

**Description**

**TECHNICAL FIELD**

The present invention relates to the field of radio communications technologies, and in particular, to a paging method and related device for trunking communication.

**BACKGROUND**

A trunking communication service refers to a dedicated communication system where multiple users share and dynamically use a group of radio channels. Because trunking communication may provide dedicated command scheduling for corporate users such as multiple departments and organizations, trunking communication has a high requirement for latency and reliability and so on.

For trunking communication, time of initially initiating a trunking service and obtaining a call authorization indication by a user is referred to as initial call latency (Initial PTT Latency); how to reduce initial call latency in trunking communication becomes a focus in the industry. In a long term evolution (LTE, Long Term Evolution) technology, a discontinuous reception (DRX, Discontinuous Reception) function is introduced to effectively save power consumption of a user equipment (UE, User Equipment) and prolong standby time. DRX may be classified into two types: DRX in a radio resource control idle (RRC_IDLE, Radio Resource Control_IDLE) state and DRX in a radio resource control protocol_connected (RRC_CONNECTED) state. The DRX technology in the RRC_IDLE state is mainly used to control the UE to monitor a physical downlink control channel (PDCCH, Physical Downlink Control Channel) at possible arrival time of downlink paging information, check whether any paging message belonging to the UE exists, and if so, further decode a physical downlink shared channel (PDSCH, Physical Downlink Shared Channel) to obtain detailed content of the paging message.

The default DRX cycle in LTE includes the following optional values: 320 ms, 640 ms, 1280 ms, 2560 ms, and so on. These long paging cycles can hardly satisfy the time requirement for quickly establishing trunking communication. Therefore, the paging mode of LTE can no longer be used to support the trunking service, and the paging cycle needs to be further shortened.

To save initial call latency in trunking communication to implement fast paging for trunking communication, a prior art is as follows: A new trunking paging channel is designed. The trunking paging channel (TPCH, Trunking Paging Channel) delivers a trunking paging cycle and paging position through system information. Therefore, significant air interface resource overheads are caused to a cell where a large number of groups or a large number of trunking users exist, and the utilization efficiency of radio resources is low.

EP 1 968 226 A1 discloses a method for improving paging speed of a called user in CDMA trunking system. The first trunking terminal selects a minus time slot paging cycle to calculate a paging time slot according to the presence of its own minus time slot paging cycle and the presence of a minus time slot paging cycle contained in an overhead message of a call channel.

US 2010 022 257 A1 relates to signaling between a mobile communication apparatus and a network access node, in particular paging-related signaling and discloses that an apparatus receives a first message having information descriptive of a parameter N in relation to a parameter T.

**SUMMARY**

The object of the present invention is achieved by the features of the appended independent claims

Embodiments of the present invention provide a paging method and related device for trunking communication, which are used to shorten initial call latency in trunking communication and reduce air interface resource overheads of a cell, and are well compatible with the existing system architecture.

In one aspect, a paging method for trunking communication is provided and includes:

   sending, by a user equipment, an information update request to a mobility management entity MME;
   receiving, by the user equipment, request response information, where the request response information includes
   a group identifier of a group that the user equipment joins and
   a group specific discontinuous reception cycle preset by a trunking server;
   sending, by the user equipment, an information update complete message to the MME; and
   after the user equipment initiates a trunking service, using, by the user equipment, a minimum value of a default paging cycle broadcast by a cell where the user equipment is located and the group specific discontinuous reception cycle corresponding to the group identifier as a paging cycle, and receiving, according to the paging cycle, group paging sent by a base station.

In another aspect, a paging method for trunking communication is provided and includes:

receiving, by a mobility management entity MME, an information update request sent by a user equipment; obtaining, by the MME from a trunking server, a group identifier of a group that the user equipment joins and a group specific discontinuous reception cycle preset by the trunking server; sending, by the MME, request response information to the user equipment, where the request response information includes the group identifier of the group that the user equipment joins and the group specific discontinuous reception cycle corresponding to the group identifier;

receiving, by the MME, an information update complete message sent by the user equipment; and

when the user equipment initiates a trunking service, sending, by the MME, group paging information to a base station, where the group paging information includes the group identifier corresponding to the user equipment and the group specific discontinuous reception cycle preset by the trunking server, for selecting a minimum value of a default paging cycle broadcast by a cell where the user equipment is located and the group specific discontinuous reception cycle corresponding to the group identifier as a paging cycle and for sending group paging to the user equipment according to the paging cycle.

In another aspect, a user equipment is provided and includes a transceiver unit and a processing unit, where:

the transceiver unit is configured to send an information update request to a mobility management entity MME;

the transceiver unit is configured to receive request response information, where the request response information includes a group identifier of a group that a user equipment joins and a group specific discontinuous reception cycle preset by a trunking server;

the transceiver unit is configured to send an information update complete message to the MME; and

the processing unit is configured to: after the user equipment initiates a trunking service, use a minimum value of a default paging cycle broadcast by a cell where the user equipment is located and the group specific discontinuous reception cycle corresponding to the group identifier received by the transceiver unit as a paging cycle, and receive, according to the paging cycle, group paging sent by a base station.

In another aspect, a mobility management entity is provided and includes a transceiver unit, an obtaining unit, and a processing unit, where:

the transceiver unit is configured to receive an information update request sent by a user equipment;

the obtaining unit is configured to obtain, from a trunking server, a group identifier of a group that the user equipment joins and a group specific discontinuous reception cycle preset by the trunking server;

the transceiver unit is configured to send request response information to the user equipment, where the request response information includes the group identifier of the group that the user equipment joins and the group specific discontinuous reception cycle preset by the trunking server;

the transceiver unit is configured to receive an information update complete message sent by the user equipment; and

the processing unit is configured to send group paging information to a base station when the user equipment initiates a trunking service, where the group paging information includes the group identifier of the group that the user equipment joins and the group specific discontinuous reception cycle preset by the trunking server, for selecting a minimum value of a default paging cycle broadcast by a cell where the user equipment is located and the group specific discontinuous reception cycle corresponding to the group identifier as a paging cycle and for sending group paging to the user equipment according to the paging cycle.

In another aspect, a trunking server is provided and includes a generating unit and a transceiver unit, where:

the generating unit is configured to generate a group specific discontinuous reception cycle for a user equipment;

the transceiver unit is configured to receive a message of the user equipment for requesting trunking information from the trunking server, where the message is forwarded by a mobility management entity MME; and

the transceiver unit is configured to send parameter configuration information to the MME, where the parameter configuration information includes a group identifier of a group that the user equipment joins and the group specific discontinuous reception cycle preset by the trunking server.

In another aspect, a system for trunking communication is provided and includes a user equipment, a base station, a mobility management entity, and a trunking server, where:

the user equipment is configured to send an information update request to the mobility management entity MME;

the mobility management entity is configured to request trunking information of the user equipment from the trunking server after receiving the information update request;

the trunking server is configured to: generate a group specific discontinuous reception cycle for the user equipment; receive a message of the user equipment for requesting trunking information from the trunking server, where the message is forwarded by the mobility management entity; and send parameter configuration information to the mobility management entity, where the parameter configuration information includes a group identifier of a group that the user equipment joins and the group specific discontinuous reception cycle preset by the trunking server;

the mobility management entity is configured to receive the parameter configuration information sent by the trunking server, and send request response information to the user equipment, where the request response information includes the group identifier of the group that the user equipment joins and the group specific discontinuous reception cycle preset by the trunking server;

the user equipment is configured to receive the request response information, and send an information update complete message to the mobility management entity;

the mobility management entity is configured to receive the information update complete message sent by the user equipment, and after the user equipment initiates a trunking service, send group paging information to the base station, where the group paging information includes the group identifier of the group that the user equipment joins and the group specific discontinuous reception cycle preset by the trunking server;

the base station is configured to receive the group paging information sent by the mobility management entity, select a minimum value of a default paging cycle broadcast by a cell where the user equipment is located and the group specific discontinuous reception cycle corresponding to the group identifier as a paging cycle, and send group paging to the user equipment according to the paging cycle; and

the user equipment is configured to use the minimum value of the default paging cycle broadcast by the cell where the user equipment is located and the group specific discontinuous reception cycle corresponding to the group identifier as a paging cycle, and receive, according to the paging cycle, the group paging sent by the base station.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a paging method for trunking communication according to an embodiment of the present invention;

FIG. 2 is a schematic diagram of another paging method for trunking communication according to an embodiment of the present invention;

FIG. 3 is a schematic diagram of another paging method for trunking communication according to an embodiment of the present invention;

FIG. 4 is a schematic diagram of a paging cycle of a trunking UE and a non-trunking UE according to an embodiment of the present invention;

FIG. 5 is a schematic diagram of another paging method for trunking communication according to an embodiment of the present invention;

FIG. 6 is a schematic diagram of another paging cycle of a trunking UE and a non-trunking UE according to an embodiment of the present invention;

FIG. 7 is a schematic diagram of another paging method for trunking communication according to an embodiment of the present invention;

FIG. 8 is a schematic diagram of another paging method for trunking communication according to an embodiment of the present invention;

FIG. 9 is a schematic diagram of another paging cycle of a trunking UE and a non-trunking UE according to an embodiment of the present invention;

FIG. 10 is a schematic diagram of another paging method for trunking communication according to an embodiment of the present invention;

FIG. 11 is a schematic diagram of a user equipment according to an embodiment of the present invention;

FIG. 12 is a schematic diagram of a mobility management entity according to an embodiment of the present invention;

FIG. 13 is a schematic diagram of a trunking server according to an embodiment of the present invention;

FIG. 14 is a schematic diagram of a system of trunking communication according to an embodiment of the present invention;

FIG. 15 is a schematic diagram of another user equipment according to an embodiment of the present invention;

FIG. 16 is a schematic diagram of a base station according to an embodiment of the present invention;
FIG. 17 is a schematic diagram of another base station according to an embodiment of the present invention; and
FIG. 18 is a schematic diagram of another user equipment according to an embodiment of the present invention.

**DESCRIPTION OF EMBODIMENTS**

Embodiments of the present invention provide a paging method and related device for trunking communication, which are used to shorten initial call latency in trunking communication and reduce air interface resource overheads of a cell, and are well compatible with the existing system architecture.

To make the objectives, features, and advantages of the present invention more apparent and comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention shall fall within the protection scope of the present invention.

For DRX in an RRC_IDLE state, a paging frame (PF, Paging Frame) may be obtained by calculation according to the following formula (1):

$$SFN \bmod T = (T \ div \ N)*(UE\_ID \bmod N) \quad (1)$$

where, SFN indicates a system frame number, T indicates a discontinuous paging cycle, N indicates the number of paging frames in a discontinuous paging cycle, and UE_ID indicates an identifier of a user equipment.

A subframe (PO, Paging Occasion) in a paging frame may be obtained by calculation according to the following formula (2):

$$i\_s = floor(UE\_ID/N) \bmod Ns \quad (2)$$

where, i_s indicates the value of a subframe in a paging frame, and Ns indicates the number of paging subframes in a paging frame.

PF and PO may be calculated according to the two formulas above, and the used parameters are specifically described as follows:

nB: 4T, 2T, T, T/2, T/4, T/8, T/16, T/32 ...
N: min(T,nB)
Ns: max(1,nB/T)
UE_ID: IMSI mod 1024

IMSI indicates an international mobile subscriber identification number (International Mobile Subscriber Identification Number).

T indicates a discontinuous paging cycle. If an upper layer assigns a DRX cycle, and a cell where a UE is located also broadcasts a default DRX cycle, T is set to the minimum value of the two DRX cycles and is used as a discontinuous paging cycle. If the upper layer does not assign a DRX cycle, T is set to the default DRX cycle of the cell.

The DRX cycle assigned by the upper layer is carried in an attach request message in an attach (ATTACH) process of the UE and is transmitted by the UE to an MME. A base station (eNodeB) does not know the DRX cycle assigned by the upper layer. When the MME delivers a paging message, the MME carries the value to notify the eNode B. In addition, the UE may obtain the default DRX cycle configured by the RRC from broadcast system information. The value of nB is also read by the UE from the system information. After the information is obtained, both the UE and the eNode B may calculate a position where the PF and PO are present according to the formula (1) and formula (2). Then the eNode B delivers a paging message in the position, and the UE receives the paging message in the same position. The default DRX cycle in existing LTE includes the following optional values: 320 ms, 640 ms, 1280 ms, 2560 ms, and so on. These long paging cycles can hardly satisfy the time requirement for quickly establishing trunking communication. Therefore, the paging mode of LTE can no longer be used to support the trunking service, and the paging cycle needs to be further shortened.

To save initial call latency in trunking communication to implement fast paging for trunking communication, a new trunking paging channel is designed. Trunking is classified into private calls and group calls. A trunking paging message is mapped from a trunking paging control channel (TPCCH, Trunking Paging Control Channel) to a trunking paging channel (TPCH, Trunking Paging Channel) and finally to a PDSCH. The trunking paging message is delivered by the TPCCH. The TPCCH delivers the trunking paging cycle and paging position through system information. However, for different users and different groups joined by the users, their paging cycles and paging positions are usually different, and the system information to be delivered is also different. Therefore, the TPCCH needs to broadcast different system information respectively to different users and different groups joined by the users. Therefore, significant air interface resource overheads are caused to a cell where a large number of groups or a large number of trunking users exist, and the utilization efficiency of radio resources is low. In addition, according to the solution of designing a new trunking paging channel, great modifications are caused to the existing LTE system, a new logical channel is added, and system compatibility is reduced.

Therefore, to solve the foregoing technical problem, the present invention provides the following technical solutions.

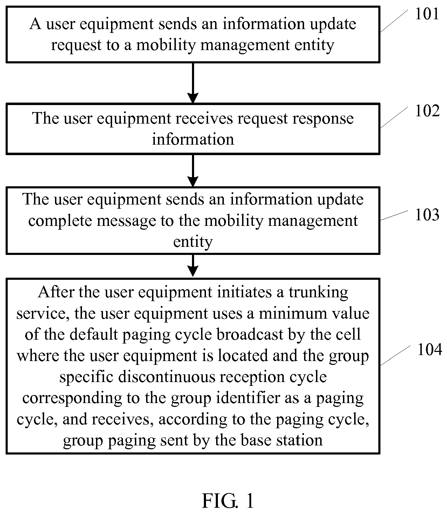

A paging method for trunking communication, which is provided by an embodiment of the present invention and implemented on a user equipment side, is shown in FIG. 1 and includes the following:

101. A user equipment sends an information update request to a mobility management entity.

In the embodiment of the present invention, the user equipment first sends an information update request to the mobility management entity (MME, Mobility Management Entity), for updating trunking information of the user equipment. In an actual application, there are multiple implementations. For example, the information update request specifically includes attach request information. When the user equipment is powered on, the user equipment actively sends the attach request (Attach Request) information to the mobility management entity. The information update request specifically includes tracking area update request information. When a tracking area is updated, the user equipment sends the tracking area update request information to the mobility management entity.

The user equipment first sends the information update request to the mobility management entity. After receiving the information update request, the mobility management entity forwards a message of the user equipment for requesting trunking information from a trunking server, and the trunking server feeds back parameter configuration information to the mobility management entity.

In the embodiment of the present invention, the trunking server sets a group specific discontinuous reception cycle (Group specific DRX) for the user equipment. In the embodiment of the present invention, the trunking server sets the group specific discontinuous reception cycle for a user equipment. In an exemplary implementation, the group specific discontinuous reception cycle set by the trunking server for the user equipment is $10 \times 2^i$ ms, where i is a natural number. That is, the group specific discontinuous reception cycle set by the trunking server is 10 ms, 20 ms, 40 ms, 80 ms, 160 ms, and so on.

Table 1 is a table of the group specific discontinuous reception cycle set by the trunking server in the embodiment of the present invention. Table 1 uses four bits of a byte, namely, the eighth bit, seventh bit, sixth bit, and fifth bit, to indicate the group specific discontinuous reception cycle set by the trunking server.

Table 1 is a table of the group specific DRX cycle

| 8 | 7 | 6 | 5 | T(ms) |
|---|---|---|---|---|
| 0 | 0 | 0 | 0 | 10 |
| 0 | 0 | 1 | 0 | 20 |
| 0 | 0 | 1 | 1 | 40 |
| 0 | 1 | 0 | 0 | 80 |
| 0 | 1 | 0 | 1 | 160 |
| 0 | 1 | 1 | 0 | 320 |
| 0 | 1 | 1 | 1 | 640 |
| 1 | 0 | 0 | 0 | 1280 |
| 1 | 0 | 0 | 1 | 2560 |

After receiving the attach request information, the trunking server sends parameter configuration information to the mobility management entity, where the parameter configuration information sent by the trunking server includes a group identifier (G-ID, Group Identifier) of a group that the user equipment joins and a group specific discontinuous reception cycle preset by the trunking server. In an exemplary implementation, the group specific discontinuous reception cycle preset by the trunking server is shorter than a default paging cycle broadcast by a cell where the user equipment is located. The default paging cycle broadcast by the cell where the user equipment is located is usually 320 ms, 640 ms, 1280 ms, 2560 ms, and so on. For example, the default paging cycle broadcast by the cell where the user equipment is located is 320 ms, and the group specific discontinuous reception cycle preset by the trunking server for the user equipment may be 10 ms or 20 ms and so on; therefore, the group specific discontinuous reception cycle is shorter than the default paging cycle broadcast by the cell where the user equipment is located.

102. The user equipment receives request response information.

After the mobility management entity receives the parameter configuration information from the trunking server, the mobility management entity feeds back request response information to the user equipment, where the request response information includes the group identifier of the group that the user equipment joins and the group specific discontinuous reception cycle preset by the trunking server. In different application scenarios, the request response information may be specifically different information. For example, when the user equipment is powered on, the mobility management entity feeds back attach response (Attach Accept) information to the user equipment. When the tracking area is updated, the mobility management entity feeds back tracking area update accept information to the user equipment.

After the mobility management entity receives the parameter configuration information delivered by the trunking server, the mobility management entity sends request response information to the user equipment, where the request response information may include the G-ID of the group that the user equipment joins and the group specific discontinuous reception cycle preset by the trunking server. Therefore, the user equipment obtains, by receiving the request response information, the G-ID of the group that the user equipment joins and the group specific discontinuous reception cycle preset by the trunking server.

It should be noted that the difference between the request response information sent by the mobility management entity to the user equipment in the embodiment of the present invention and the existing request response information lies in that the request response information in the embodiment of the present invention additionally includes the group specific discontinuous reception cycle preset by the trunking server, compared with the existing request response information, as shown in Table 2.

Table 2 is request response information content

| Information Element | Type/Reference | Presence | Format | Length |
|---|---|---|---|---|
| Protocol discriminator | Protocol discriminator 9.2 | Mandatory | Format type V | 1/2 |
| Security header type | Security header type 9.3.1 | Mandatory | Format type V | 1/2 |
| ..... | ... | ... | ... | ... |
| Equivalent public land mobile networks | Public land mobile network list 9.9.2.6 | Optional | Format type TLV | 5-47 |
| Group specific discontinuous reception cycle | Discontinuous reception cycle type | Optional | Format type V | 1/2 |

In the foregoing table, the information element is an Information Element, the type/reference indicates a Type/Reference, the presence indicates Presence (M represents mandatory, and O represents optional), the format indicates a Format (V and TLV are respectively a format type), and the length indicates Length (1/2 represents that one half of a byte is used). The protocol discriminator is a Protocol discriminator, the security header type is a Security header type, the equivalent public land mobile networks are Equivalent PLMNs, and the public land mobile network list is a PLMN list.

103. The user equipment sends an information update complete message to the mobility management entity.

After the user equipment receives the G-ID of the group that the user equipment joins and the group specific discontinuous reception cycle preset by the trunking server, the user equipment feeds back an information update complete message to the mobility management entity, indicating that the user equipment has received the request response information. In different application scenarios, the information update complete message may be specifically different information. For example, when the user equipment is powered on, the user equipment feeds back attach complete (Attach Complete) information to the mobility management entity. When the tracking area is updated, the user equipment feeds back a tracking area update complete message to the mobility management entity.

104. After the user equipment initiates a trunking service, the user equipment uses a minimum value of the default paging cycle broadcast by the cell where the user equipment is located and the group specific discontinuous reception cycle corresponding to the group identifier as a paging cycle, and receives, according to the paging cycle, group paging sent by a base station.

In the embodiment of the present invention, when the user equipment initiates a trunking service, the mobility management entity delivers group paging information to the base station, where the group paging information includes: the group identifier of the group that the user equipment joins and the group specific discontinuous reception cycle corresponding to the group identifier. In the preceding operation 102, the mobility management entity sends the request response information to the user equipment. The user equipment may obtain the group identifier of the group that the user equipment joins and the group specific discontinuous reception cycle preset by the trunking server, but the request response information is transparently transmitted for the base station, and the base station will not obtain the request response information. When the user equipment initiates a trunking service, the mobility management entity actively delivers group paging information to the base station, notifying the base station of the group identifier of the group that the user equipment joins and the group specific discontinuous reception cycle preset by the trunking server. After the base station receives the group paging information sent by the mobility management entity, the base station selects a minimum value of the default paging cycle broadcast by the cell where the user equipment is located and the group specific discontinuous reception cycle corresponding to the group identifier as a paging cycle, and sends group paging to the user equipment according to the paging cycle. In the embodiment of the present invention, the base station selects the minimum value of the default paging cycle broadcast by the cell where the user equipment is located and the group specific discontinuous reception cycle corresponding to the group identifier as a paging cycle, for the purpose of being better compatible with the existing system, because in the existing system, the default DRX cycle broadcast by the cell and the DRX cycle assigned by the upper layer are judged and then a minimum value is used. In the embodiment of the present invention, the base station side and the user equipment side use a same judging mechanism, and therefore can be better integrated with the existing system.

In the paging method for trunking communication according to the embodiment of the present invention, the trunking server sets a group specific discontinuous reception cycle for the user equipment; after the trunking server delivers the group specific discontinuous reception cycle to the mobility management entity, the mobility management entity notifies the group specific discontinuous reception cycle to the user equipment through request response information. Because the user equipment selects the minimum value of the default paging cycle broadcast by the cell where the user equipment is located and the group specific discontinuous reception cycle corresponding to the group identifier as a paging cycle, and receives, according to the paging cycle, group paging sent by the base station, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

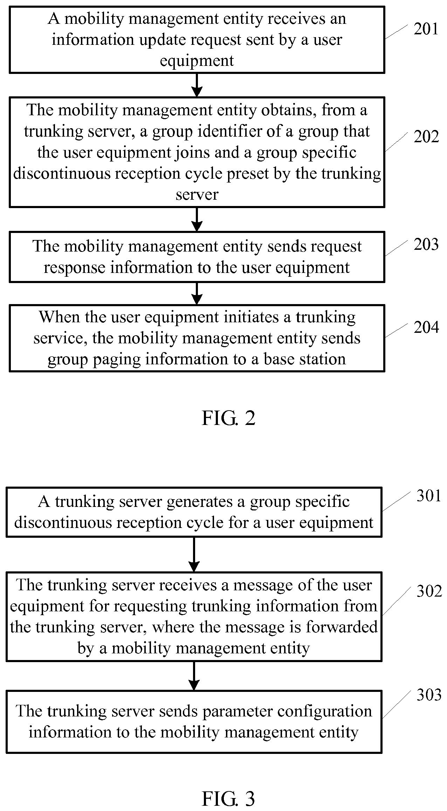

A paging method for trunking communication, which is provided by an embodiment of the present invention and implemented based on a mobility management entity side, is shown in FIG. 2 and includes the following:

201. A mobility management entity receives an information update request sent by a user equipment.

In the embodiment of the present invention, the mobility management entity receives the information update request sent by the user equipment. There are multiple implementations. For example, the information update request specifically includes attach request information. When the user equipment is powered on, the mobility management entity receives the attach request information sent by the user equipment. The information update request specifically includes tracking area update request information. When a tracking area is updated, the mobility management entity receives the tracking area update request information sent by the user equipment.

202. The mobility management entity obtains, from a trunking server, a group identifier of a group that the user equipment joins and a group specific discontinuous reception cycle preset by the trunking server.

After the mobility management entity receives the information update request sent by the user equipment, the mobility management entity obtains, from the trunking server, the group identifier of the group that the user equipment joins and the group specific discontinuous reception cycle preset by the trunking server. In an optional implementation manner, the mobility management entity requests trunking information of the user equipment from the trunking server, and the trunking server feeds back parameter configuration information to the mobility management entity. The mobility management entity receives the parameter configuration information sent by the trunking server. The parameter configuration information includes the group identifier of the group that the user equipment joins and the group specific discontinuous reception cycle preset by the trunking server.

In the embodiment of the present invention, the trunking server sets the group specific discontinuous reception cycle for the user equipment. In the embodiment of the present invention, the trunking server sets the group specific discontinuous reception cycle for a user equipment, unlike the prior art in which the user equipment reports the discontinuous reception cycle. In an exemplary implementation, the group specific discontinuous reception cycle preset by the trunking server for the user equipment is $10 \times 2^i$ ms, where i is a natural number. That is, the group specific discontinuous reception cycle set by the trunking server is 10 ms, 20 ms, 40 ms, 80 ms, 160 ms, and so on.

After receiving the trunking information, the trunking server sends parameter configuration information to the mobility management entity, where the parameter configuration information sent by the trunking server includes the group identifier of the group that the user equipment joins and the group specific discontinuous reception cycle preset by the trunking server. In an exemplary implementation, the group specific discontinuous reception cycle preset by the trunking server is shorter than a default paging cycle broadcast by a cell where the user equipment is located. The default paging cycle broadcast by the cell where the user equipment is located is usually 320 ms, 640 ms, 1280 ms, 2560 ms, and so on. For example, the default paging cycle broadcast by the cell where the user equipment is located is 320 ms, and the group specific discontinuous reception cycle preset by the trunking server for the user equipment may be 10 ms or 20 ms and so on; therefore, the group specific discontinuous reception cycle is shorter than the default paging cycle broadcast by the cell where the user equipment is located.

203. The mobility management entity sends request response information to the user equipment.

The request response information includes the group identifier of the group that the user equipment joins and the group specific discontinuous reception cycle preset by the trunking server. In different application scenarios, the request response information may be specifically different information. For example, when the user equipment is powered on, the user equipment sends attach request information to the mobility management entity, and the mobility management entity feeds back attach response information to the user equipment. When the tracking area is updated, the user equipment sends tracking area update request information to the mobility management entity, and the mobility management entity feeds back tracking area update accept information to the user equipment.

After the mobility management entity receives the parameter configuration information delivered by the trunking server, the mobility management entity sends request response information to the user equipment, where the request response information may include the G-ID of the group that the user equipment joins and the group specific discontinuous reception cycle preset by the trunking server. Therefore, the user equipment obtains, by receiving the request response information, the G-ID of the group that the user equipment joins and the group specific discontinuous reception cycle preset by the trunking server.

204. When the user equipment initiates a trunking service, the mobility management entity sends group paging information to a base station.

The group paging information includes the group identifier of the group that the user equipment joins and the group specific discontinuous reception cycle preset by the trunking server, so that the base station selects a minimum value of the default paging cycle broadcast by the cell where the user equipment is located and the group specific discontinuous reception cycle corresponding to the group identifier as a paging cycle, and sends, according to the paging cycle, group paging to the user equipment.

In the paging method for trunking communication according to the embodiment of the present invention, the trunking server sets a group specific discontinuous reception cycle for the user equipment; after the trunking server delivers the group specific discontinuous reception cycle to the mobility management entity, the mobility management entity notifies the group specific discontinuous reception cycle to the user equipment through request response information. Because the user equipment selects the minimum value of the default paging cycle broadcast by the cell where the user equipment is located and the group specific discontinuous reception cycle corresponding to the group identifier as a paging cycle, and receives, according to the paging cycle, group paging sent by the base station, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

A paging method for trunking communication, which is provided by an embodiment of the present invention and implemented based on a trunking server side, is shown in FIG. 3 and includes the following:

301. A trunking server generates a group specific discontinuous reception cycle for a user equipment.

In the embodiment of the present invention, the trunking server actively generates a group specific discontinuous reception cycle for the user equipment. In an exemplary implementation, the group specific discontinuous reception cycle preset by the trunking server for the user equipment is $10 \times 2^i$ ms, where i is a natural number. That is, the group specific discontinuous reception cycle set by the trunking server is 10 ms, 20 ms, 40 ms, 80 ms, 160 ms, and so on. Different from the prior art in which the user equipment reports the paging cycle, in the embodiment of the present invention, the trunking server actively generates a group specific discontinuous reception cycle. In an exemplary implementation, the group specific discontinuous reception cycle preset by the trunking server is shorter than a default paging cycle broadcast by a cell where the user equipment is located. The default paging cycle broadcast by the cell where the user equipment is located is usually 320 ms, 640 ms, 1280 ms, 2560 ms, and so on. For example, the default paging cycle broadcast by the cell where the user equipment is located is 320 ms, and the group specific discontinuous reception cycle preset by the trunking server for the user equipment may be 10 ms or 20 ms and so on; therefore, the group specific discontinuous reception cycle is shorter than the default paging cycle broadcast by the cell where the user equipment is located.

302. The trunking server receives a message of the user equipment for requesting trunking information from the trunking server, where the message is forwarded by a mobility management entity.

In the embodiment of the present invention, the trunking server receives, from the mobility management entity, a message of the user equipment for requesting trunking information. For example, when the user equipment is powered on, the user equipment requests trunking information from the mobility management entity, and the mobility management entity forwards the message for requesting trunking information to the trunking server. When a tracking area is updated, the user equipment requests trunking information from the mobility management entity, and the mobility management entity forwards the message for requesting trunking information to the trunking server.

303. The trunking server sends parameter configuration information to the mobility management entity, where the parameter configuration information includes a group identifier of a group that the user equipment joins and the group specific discontinuous reception cycle preset by the trunking server.

The trunking server sends parameter configuration information to the mobility management entity. In an exemplary implementation, the group specific discontinuous reception cycle preset by the trunking server in the parameter configuration information is shorter than the default paging cycle broadcast by the cell where the user equipment is located.

The following uses an actual application example to describe the paging method for trunking communication in the embodiments of the present invention shown in FIG. 1, FIG. 2, and FIG. 3.

The G-ID delivered by the trunking server to the mobility management entity is used as a group call identifier, and the G-ID is a group identifier represented by two character strings. A UEIdentityIndexValue parameter is modified to G-ID (group identifier) for calculating a PF.

The group specific discontinuous reception cycle is
PagingDRX ::= ENUMERATED {v1, v2, v4, v8, v16, v32, v64, v128, v256, ...}, and
the existing default paging cycle is
PagingDRX::=ENUMERATED {v32, v64, v128, v256, ...}.

Compared with the existing PagingDRX, four paging cycles v1, v2, v4, and v8 are added; v16 is a group specific discontinuous reception cycle in the embodiment of the present invention, where v1, v2, v4, v8, and v16 respectively represent 10 ms, 20 ms, 40 ms, 80 ms, and 160 ms.

It is assumed that the default paging cycle T broadcast by the cell is 16 (namely, 160 ms), and that the group specific discontinuous reception cycle assigned by the trunking server is 4 (namely, 40 ms), corresponding to the PagingDRX value of v4; nB is T/4; and UE_ID = G-ID mod 1024, where UE_ID is set to 5.

Then, T = min(16, 4) = 4;
N = min(T, nB) = T/4 = 1; and
Ns = max(1, nB/T) = 1.

The PF is calculated as follows:

$$\text{SFN mod } T = (T \text{ div } N) * (UE\_ID \text{ mod } N) = 4*0 = 0.$$

Therefore, the paging position of the PF is: 0, 0+4, 0+4+4, and so on. Group paging of the base station may be received in subframe 0, subframe 4, subframe 8, and so on, that is, at an interval of 4 frames, the position of a subframe may be used as a paging position.

For a non-trunking UE, its paging cycle is the default paging cycle T = 16 of the cell, and therefore, the corresponding PF is:

$$\text{SFN mod } T = (T \text{ div } N) * (UE\_ID \text{ mod } N) = 0,$$

that is, the paging position of the non-trunking PF is: 0, 0+16, 0+16+16, and so on.

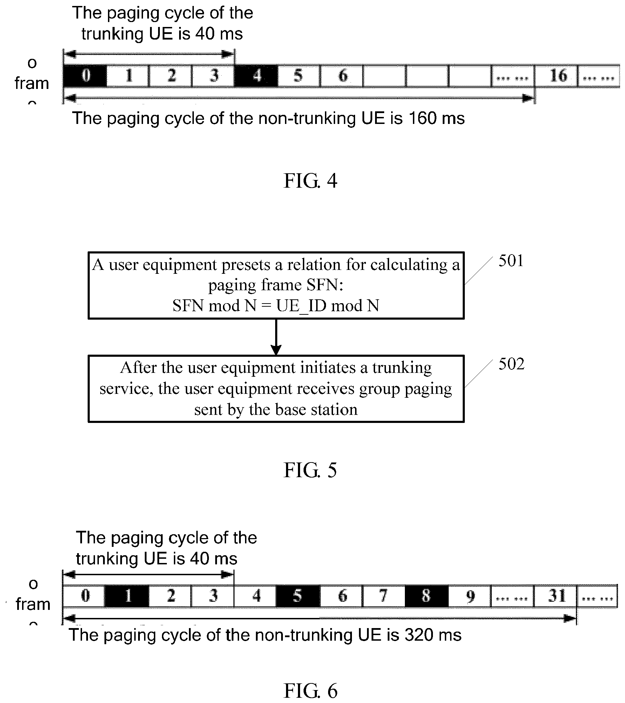

FIG. 4 is a schematic diagram of a paging cycle of a trunking UE and a non-trunking UE in the foregoing application example. According to the method in the embodiment of the present invention, the paging cycle of the UE in trunking communication is 40 ms, and the paging cycle of the UE in a non-trunking service is 160 ms. The paging cycle of the UE in trunking communication is far shorter than the paging cycle of the UE in the non-trunking service.

A paging method for trunking communication is described above. The following describes another paging method for trunking communication according to an embodiment of the present invention.

A paging method for trunking communication, which is provided by an embodiment of the present invention and implemented based on a user equipment side, is shown in FIG. 5 and includes the following:

501. A user equipment presets a relation for calculating a paging frame SFN:

$$\text{SFN mod N} = \text{UE\_ID mod N},$$

where N indicates a trunking paging cycle, N = min(T, nB), and UE_ID = G-ID mod 1024, where G-ID indicates a group identifier of a group that the user equipment joins, T indicates a default paging cycle broadcast by a cell where the user equipment is located, and nB is a paging density related parameter broadcast by a base station.

502. After the user equipment initiates a trunking service, the user equipment receives group paging sent by the base station. A paging frame SFN used in the group paging satisfies the following relation:

$$\text{SFN mod N} = \text{UE\_ID mod N}.$$

In the embodiment of the present invention, in an optional implementation manner, nB satisfies the following relationship:

If nB is greater than T/M, during calculation of the trunking paging cycle, the user equipment replaces the value of nB in N = min(T, nB) with T/M, where M is a paging cycle modification parameter preset by both the user equipment and the base station.

If nB is smaller than 10 ms, during calculation of the trunking paging cycle, the user equipment replaces the value of nB in N = min(T, nB) with 10 ms.

It should be noted that the value of nB is set by the base station, and that T1 may be one of T/4, T/8, T/16, and T/32. In addition, the paging cycle modification parameter M is directly preset in the base station and user equipment.

In an actual application, the configured protocol format of PCCH-Config is as follows:

```
    PCCH-Config ::= SEQUENCE {
 defaultPagingCycle ENUMERATED {
                        rf32, rf64, rf128, rf256},
 nB ENUMERATED {
                        fourT, twoT, oneT, halfT, quarterT, oneEighthT,
                        oneSixteenthT, oneThirtySecondT}
    }
```

In the paging method for trunking communication according to the embodiment of the present invention, the user equipment first presets a relation for calculating a paging frame SFN; and the user equipment receives, in a paging frame SFN using N as a paging cycle, group paging sent by the base station. Because N is set to the minimum value of the default paging cycle T broadcast by the cell where the user equipment is located and nB, the paging cycle may be shortened, and initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

The following uses a specific application example for description:

It is assumed that the default paging cycle T broadcast by the cell where the user equipment is located is 32, and that UE_ID = G-ID mod 1024, where UE_ID is set to 5. If nB = T/8, N = min(T, nB)= 4.

The PF of the trunking UE is:

$$\text{SFN mod N} = \text{UE\_ID mod N} = 1.$$

Therefore, the paging position of the PF is: 1, 1+4, 1+4+4, and so on. Group paging of the base station may be received in subframe 0, subframe 4, subframe 8, and so on. That is, at an interval of 4 frames, the position of a subframe may be used as a paging position.

For a non-trunking UE, its paging cycle is the default paging cycle T = 32 of the cell, and therefore, the corresponding PF is:

$$\text{SFN mod T} = (\text{T div N}) * (\text{UE\_ID mod N}) = 8,$$

that is, the paging position of the non-trunking PF is: 8, 8+16, 8+16+16, and so on.

The paging cycle of the non-trunking UE in subframe 8, subframe 16, and so on of the paging frame is 320 ms.

FIG. 6 is a schematic diagram of a paging cycle of a trunking UE and a non-trunking UE in the foregoing application example. According to the method in the embodiment of the present invention, the paging cycle of the UE in trunking communication is 40 ms, and subframe 1 and subframe 5 are paging positions of the UE in trunking communication. The paging cycle of the UE in the non-trunking service is 320 ms, and subframe 8 is the paging position of the UE in the non-trunking service. The paging cycle of the UE in trunking communication is far shorter than the paging cycle of the UE in the non-trunking service.

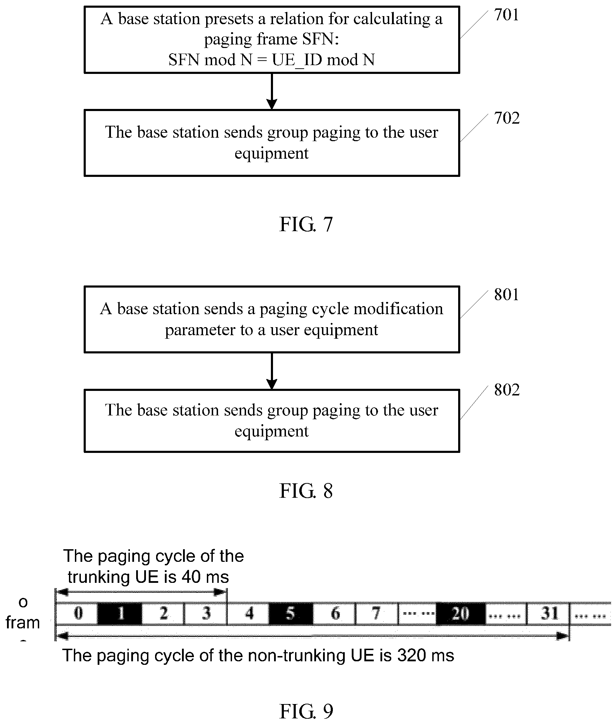

A paging method for trunking communication, which is provided by an embodiment of the present invention and implemented based on a base station side, is shown in FIG. 7 and includes the following:

701. A base station presets a relation for calculating a paging frame SFN: SFN mod N = UE_ID mod N, where N indicates a trunking paging cycle, N = min(T, nB), and UE_ID = G-ID mod 1024, where G-ID indicates a group identifier of a group that a user equipment joins, T indicates a default paging cycle broadcast by a cell where the user equipment is located, and nB is a paging density related parameter broadcast by the base station.
702. The base station sends group paging to the user equipment. A paging frame SFN used in the group paging satisfies the following relation: SFN mod N = UE_ID mod N.

In the embodiment of the present invention, in an optional implementation manner, nB satisfies the following relationship:

If nB is greater than T/M, during calculation of the trunking paging cycle, the user equipment replaces the value of nB in N = min(T, nB) with T/M, where M is a paging cycle modification parameter preset by both the user equipment and the base station.
If nB is smaller than 10 ms, during calculation of the trunking paging cycle, the user equipment replaces the value of nB in N = min(T, nB) with 10 ms.

It should be noted that the value of nB is set by the base station, and that T1 may be one of T/4, T/8, T/16, and T/32. In addition, the paging cycle modification parameter M is directly preset in the base station and user equipment.

In the paging method for trunking communication according to the embodiment of the present invention, the base station first presets a relation for calculating a paging frame SFN; and the base station sends, in a paging frame using N as a paging cycle, group paging to the user equipment. Because N is set to the minimum value of the default paging cycle T broadcast by the cell where the user equipment is located and nB, the paging cycle may be shortened, and initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

The following describes another paging method for trunking communication according to an embodiment of the present invention. As shown in FIG. 8, a paging method for trunking communication, which is provided by an embodiment of the present invention and implemented based on a base station side, includes the following:

801. A base station sends a paging cycle modification parameter to a user equipment.

The paging cycle modification parameter is used to indicate that a default paging cycle T broadcast by a cell where the user equipment is located is modified to a paging cycle T/M, where M is a non-zero natural number.

In the embodiment of the present invention, the base station divides T into M parts according to the default paging cycle T broadcast by the cell where the user equipment is located. In this way, the paging cycle of trunking paging is shortened to T/M, where M is a non-zero natural number. The base station in trunking communication sends the parameter M to the user equipment, and a new parameter referred to as M is introduced for trunking.

In an actual application, the sending, by the base station, a paging cycle modification parameter to the user equipment, may be specifically broadcasting, by the base station through system information block type 2 (SIB 2, System Information Block 2) carrying paging cycle modification parameters M, nB, and T, the paging cycle modification parameters to the user equipment. Of course, other methods for sending a paging cycle modification parameter to the user equipment may also exist. For example, the base station may directly send a paging cycle modification parameter to the user equipment through a separate piece of signaling. The base station may also send the paging cycle modification parameter to the user equipment through other signaling in the system, which is not limited herein.

802. The base station sends group paging to the user equipment.

A paging frame SFN used in the group paging sent by the base station to the user equipment satisfies the following relation:

$$SFN \bmod (T/M) = ((T/M) \text{ div } N) * (UE\_ID \bmod N),$$

where, the number N of paging frames in the paging cycle is min(T/M, nB), where T indicates the default paging cycle broadcast by the cell where the user equipment is located, and UE_ID = G-ID mod 1024, where G-ID indicates a group identifier of a group that the user equipment joins, and nB is one of 4T, 2T, T, T/2, T/4, T/8, T/16, and T/32.

In the paging method for trunking communication according to the embodiment of the present invention, the base station sends a paging cycle modification parameter to the user equipment, where the paging cycle modification parameter is used to indicate that the default paging cycle T broadcast by the cell where the user equipment is located is modified to a paging cycle T/M. Because the paging cycle is modified and shortened by M times, the paging cycle may be shortened, and the initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

The following uses a specific application example for description:

It is assumed that the default paging cycle T broadcast by the cell where the user equipment is located is 32, and that UE_ID = G-ID mod 1024, where UE_ID is set to 5. If nB = T/4, N = min(T, nB)= 4. Assuming that the paging cycle modification parameter M selected by the base station is 8, T/M = 4.

The PF of the trunking UE is:

$$SFN \bmod (T/M) = ((T/M) \text{ div } N)*(UE\_ID \bmod N) = 1.$$

Therefore, the paging position of the PF is: 1, 1+4, 1+4+4, and so on. Group paging of the base station may be received in subframe 0, subframe 4, subframe 8, and so on. That is, at an interval of 4 frames, the position of a subframe may be used as a paging position.

For a non-trunking UE, its paging cycle is the default paging cycle T = 32 of the cell, and therefore, the corresponding PF is:

$$SFN \bmod T = (T \text{ div } N) * (UE\_ID \bmod N),$$

that is, the paging position of the non-trunking PF is: 20, 20+32, 20+32+32, and so on.

It may be calculated that the non-trunking UE is present in subframe 20 for the first time, and the paging cycle is 320 ms.

FIG. 9 is a schematic diagram of a paging cycle of a trunking UE and a non-trunking UE in the foregoing application example. According to the method in the embodiment of the present invention, the paging cycle of the UE in trunking communication is 40 ms, and subframe 1 and subframe 5 are paging positions of the UE in trunking communication. The paging cycle of the UE in the non-trunking service is 320 ms, and subframe 20 is the paging position of the UE in the non-trunking service. The paging cycle of the UE in trunking communication is far shorter than the paging cycle of the UE in the non-trunking service.

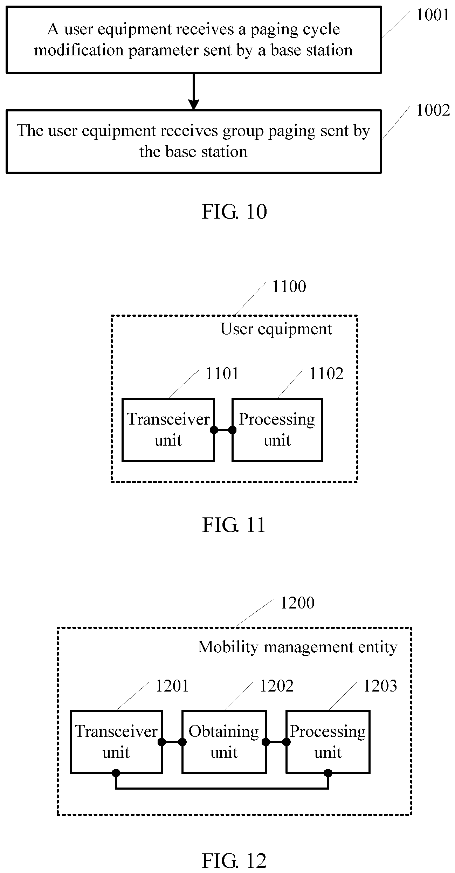

A paging method for trunking communication, which is provided by an embodiment of the present invention and implemented based on a user equipment side, is hereinafter described. As shown in FIG. 10, the method includes the following:

1001. A user equipment receives a paging cycle modification parameter sent by a base station.

The paging cycle modification parameter is used to indicate that a default paging cycle T broadcast by a cell where the user equipment is located is modified to a paging cycle T/M, where M is a non-zero natural number.

In the embodiment of the present invention, the user equipment receives the paging cycle modification parameter sent by the base station. After the user equipment receives the paging cycle modification parameter, the user equipment divides T into M parts according to the default paging cycle T broadcast by the cell where the user equipment is located. In this way, the paging cycle of trunking paging is shortened to T/M, where M is a non-zero natural number. The user equipment in trunking communication obtains the parameter M, and a new parameter referred to as M is introduced for trunking.

In an actual application, the receiving, by the user equipment, a paging cycle modification parameter sent by the base station may be specifically receiving, by the user equipment, system information block type 2 broadcast by the base station, where the system information block type 2 carries paging cycle modification parameters M, nB, and T. Of course, other methods for receiving the paging cycle modification parameter by the user equipment may also exist. For example, the user equipment may receive the paging cycle modification parameter through a separate piece of signaling used by the base station; the user equipment may further receive the paging cycle modification parameter through other signaling in the system used by the base station, which is not limited herein.

1002. The user equipment receives group paging sent by the base station.

A paging frame SFN used in the group paging received by the user equipment from the base station satisfies the following relation:

$$\text{SFN mod (T/M)} = ((\text{T/M) div N)} * (\text{UE\_ID mod N}),$$

where, the number N of paging frames in the paging cycle is min(T/M, nB), where T indicates the default paging cycle broadcast by the cell where the user equipment is located, and UE_ID = G-ID mod 1024, where G-ID indicates a group identifier of a group that the user equipment joins, and nB is one of 4T, 2T, T, T/2, T/4, T/8, T/16, and T/32.

In the paging method for trunking communication according to the embodiment of the present invention, the user equipment receives a paging cycle modification parameter sent by the base station, where the paging cycle modification parameter is used to indicate that the default paging cycle T broadcast by the cell where the user equipment is located is modified to a paging cycle T/M. Because the paging cycle is modified and shortened by M times, the paging cycle may be shortened, and the initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

Several different paging methods for trunking communication are described in the foregoing embodiments. Apparatuses and devices using the methods are hereinafter described.

As shown in FIG. 11, a user equipment 1100 provided by an embodiment of the present invention includes: a transceiver unit 1101 and a processing unit 1102.

The transceiver unit 1101 is configured to send an information update request to a mobility management entity.

The transceiver unit 1101 is configured to send request response information. The request response information includes a group identifier of a group that the user equipment joins and a group specific discontinuous reception cycle preset by a trunking server.

The transceiver unit 1101 is configured to send an information update complete message to the mobility management entity.

The processing unit 1102 is configured to: after the user equipment initiates a trunking service, use a minimum value of a default paging cycle broadcast by a cell where the user equipment is located and the group specific discontinuous reception cycle corresponding to the group identifier received by the transceiver unit 1101 as a paging cycle, and receive, according to the paging cycle, group paging sent by a base station.

It should be noted that for the transceiver unit 1101, in a specific implementation, the transceiver unit 1101 is specifically configured to: send attach request information to the MME when the user equipment is powered on; or send tracking area update request information to the MME when a tracking area is updated.

It should be noted that for the transceiver unit 1101, in a specific implementation, the group specific discontinuous reception cycle in the request response information received by the transceiver unit 1101 includes: $10 \times 2^i$ ms, where i is a natural number.

It should be noted that with respect to the information exchange between the modules/units in the foregoing apparatus as well as the execution processes, because they are based on the same conception as the method embodiments of the present invention and bring the same technical effects as the method embodiments of the present invention, they are not repeated herein. For details, reference may be made to the description in the method embodiment shown in FIG. 1 of the present invention.

In the embodiment of the present invention, the trunking server sets a group specific discontinuous reception cycle for the user equipment; after the trunking server delivers the group specific discontinuous reception cycle to the mobility management entity, the mobility management entity notifies the group specific discontinuous reception cycle to the user equipment through request response information. Because the processing unit 1102 selects the minimum value of the default paging cycle broadcast by the cell where the user equipment is located and the group specific discontinuous reception cycle preset by the trunking server as a paging cycle, and receives, according to the group identifier and the paging cycle, group paging sent by the base station, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

As shown in FIG. 12, a mobility management entity 1200 provided by an embodiment of the present invention includes: a transceiver unit 1201, an obtaining unit 1202, and a processing unit 1203.

The transceiver unit 1201 is configured to receive an information update request sent by a user equipment.

The obtaining unit 1202 is configured to obtain, from a trunking server, a group identifier of a group that the user equipment joins and a group specific discontinuous reception cycle preset by the trunking server.

The transceiver unit 1201 is configured to send request response information to the user equipment, where the request response information includes the group identifier of the group that the user equipment joins and the group specific discontinuous reception cycle preset by the trunking server.

The transceiver unit 1201 is configured to receive an information update complete message sent by the user equipment.

The processing unit 1203 is configured to send group paging information to a base station when the user equipment initiates a trunking service, where the group paging information includes the group identifier of the group that the user equipment joins and the group specific discontinuous reception cycle preset by the trunking server, so that the base station selects a minimum value of a default paging cycle broadcast by a cell where the user equipment is located and the group specific discontinuous reception cycle corresponding to the group identifier as a paging cycle and sends group paging to the user equipment according to the paging cycle.

It should be noted that for the obtaining unit 1202, in a specific implementation, the obtaining unit 1202 is specifically configured to: forward a message of the user equipment for requesting trunking information from the trunking server; and receive parameter configuration information sent by the trunking server, where the parameter configuration information includes the group identifier of the group that the user equipment joins and the group specific discontinuous reception cycle preset by the trunking server.

It should be noted that with respect to the information exchange between the modules/units in the foregoing apparatus as well as the execution processes, because they are based on the same conception as the method embodiments of the present invention and bring the same technical effects as the method embodiments of the present invention, they are not repeated herein. For details, reference may be made to the description in the method embodiment shown in FIG. 2 of the present invention.

In the embodiment of the present invention, the trunking server sets a group specific discontinuous reception cycle for the user equipment; after the transceiver unit 1201 receives an information update request sent by the user equipment, the obtaining unit 1202 obtains, from the trunking server, the group identifier of the group that the user equipment joins and the group specific discontinuous reception cycle preset by the trunking server. Because the user equipment selects the minimum value of the default paging cycle broadcast by the cell where the user equipment is located and the group specific discontinuous reception cycle preset by the trunking server as a paging cycle, the paging cycle may be shortened. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

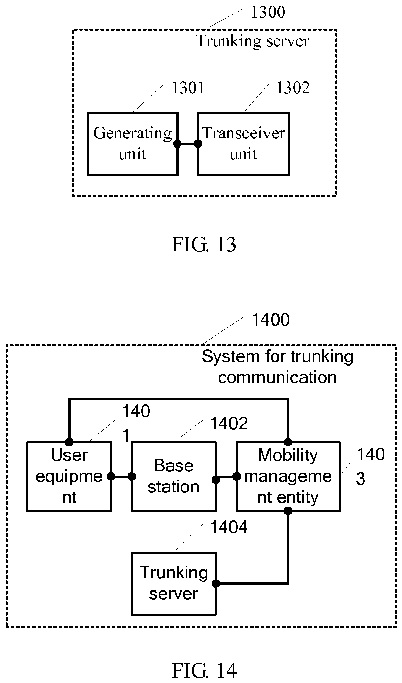

As shown in FIG. 13, a trunking server 1300 provided by an embodiment of the present invention includes: a generating unit 1301 and a transceiver unit 1302.

The generating unit 1301 is configured to generate a group specific discontinuous reception cycle for a user equipment.

The transceiver unit 1302 is configured to receive a message of the user equipment for requesting trunking information from the trunking server, where the message is forwarded by a mobility management entity MME.

The transceiver unit 1302 is configured to send parameter configuration information to the MME, where the parameter configuration information includes a group identifier of a group that the user equipment joins and the group specific discontinuous reception cycle preset by the trunking server.

It should be noted that for the generating unit 1301, in a specific implementation, the group specific discontinuous reception cycle generated by the generating unit 1301 includes 10 x $2^i$ ms, where i is a natural number.

As shown in FIG. 14, a system 1400 for trunking communication provided by an embodiment of the present invention includes: a user equipment 1401, a base station 1402, a mobility management entity 1403, and a trunking server 1404.

The user equipment 1401 is configured to send an information update request to the mobility management entity 1403.

The mobility management entity 1403 is configured to request trunking information of the user equipment 1401 from the trunking server 1404 after receiving the information update request.

The trunking server 1404 is configured to: generate a group specific discontinuous reception cycle for the user equipment 1401, receive the trunking information sent by the mobility management entity 1403; and send parameter configuration information to the mobility management entity 1403, where the parameter configuration information includes a group identifier of a group that the user equipment 1401 joins and the group specific discontinuous reception cycle preset by the trunking server 1404.

The mobility management entity 1403 is configured to receive the parameter configuration information sent by the trunking server 1404, and send request response information to the user equipment 1401, where the request response information includes the group identifier of the group that the user equipment 1401 joins and the group specific discontinuous reception cycle preset by the trunking server 1404.

The user equipment 1401 is configured to receive the request response information, and send an information update complete message to the mobility management entity 1403.

The mobility management entity 1403 is configured to receive the information update complete message sent by the user equipment 1401, and after the user equipment 1401 initiates a trunking service, send group paging information to the base station 1402, where the group paging information includes the group identifier of the group that the user equipment 1401 joins and the group specific discontinuous reception cycle preset by the trunking server 1404.

The base station 1402 is configured to: receive the group paging information sent by the mobility management entity 1403, select a minimum value of a default paging cycle broadcast by a cell where the user equipment 1401 is located and the group specific discontinuous reception cycle corresponding to the group identifier as a paging cycle, and send group paging to the user equipment 1401 according to the paging cycle.

The user equipment 1401 is configured to use the minimum value of the default paging cycle broadcast by the cell where the user equipment 1401 is located and the group specific discontinuous reception cycle preset by the trunking server 1404 as a paging cycle, and receive, according to the group identifier and the paging cycle, the group paging sent by the base station 1402.

In the embodiment of the present invention, the trunking server 1404 sets a group specific discontinuous reception cycle for the user equipment 1401; after the trunking server 1404 delivers the group specific discontinuous reception cycle to the mobility management entity 1403, the mobility management entity 1403 notifies the group specific discontinuous reception cycle to the user equipment 1401 through request response information. Because the user equipment 1401 selects the minimum value of the default paging cycle broadcast by the cell where the user equipment is located and the group specific discontinuous reception cycle corresponding to the group identifier as a paging cycle, and receives, according to the paging cycle, group paging sent by the base station, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

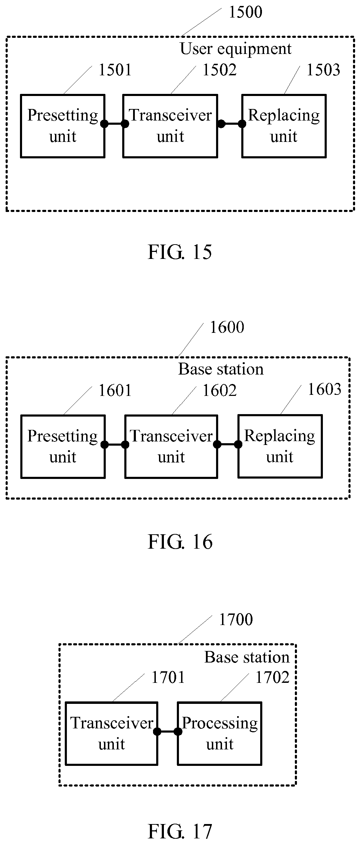

An embodiment of the present invention provides another user equipment. As shown in FIG. 15, a user equipment 1500 includes: a presetting unit 1501 and a transceiver unit 1502.

The presetting unit 1501 is configured to preset a relation for calculating a paging frame SFN:

$$\text{SFN mod N} = \text{UE\_ID mod N},$$

where N indicates a trunking paging cycle, N = min(T, nB), and UE_ID = G-ID mod 1024, where G-ID indicates a group identifier of a group that the user equipment joins, T indicates a default paging cycle broadcast by a cell where the user equipment is located, and nB is a paging density related parameter broadcast by a base station.

The processing unit 1502 is configured to receive group paging sent by the base station, where a paging frame SFN used in the group paging satisfies the following relation: SFN mod N = UE_ID mod N.

It should be noted that for the user equipment 1500, in a specific implementation, the user equipment 1500 may further include:

a replacing unit 1503, configured to: if nB is greater than T/M, during calculation of the trunking paging cycle, replace a value of nB in N = min(T, nB) with T/M, where M is a paging cycle modification parameter preset by both the user equipment 1500 and the base station; or during calculation of the trunking paging cycle, replace a value of nB in N = min(T, nB) with 10 ms.

In the user equipment provided by the embodiment of the present invention, the presetting unit 1501 first presets a relation for calculating a paging frame SFN; and the processing unit 1502 receives, in a paging frame using N as a paging cycle, group paging sent by the base station. Because N is set to the minimum value of the default paging cycle T broadcast by the cell where the user equipment is located and nB, the paging cycle may be shortened, and initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

An embodiment of the present invention provides a base station. As shown in FIG. 16, a base station 1600 includes: a presetting unit 1601 and a transceiver unit 1602.

The presetting unit 1601 is configured to preset a relation for calculating a paging frame SFN:

$$SFN \bmod N = UE\_ID \bmod N,$$

where N indicates a trunking paging cycle, N = min(T, nB), and UE_ID = G-ID mod 1024, where G-ID indicates a group identifier of a group that a user equipment joins, T indicates a default paging cycle broadcast by a cell where the user equipment is located, and nB is a paging density related parameter broadcast by the base station.

The processing unit 1602 is configured to send group paging to the user equipment, where a paging frame SFN used in the group paging satisfies the following relation: SFN mod N = UE_ID mod N.

It should be noted that for the base station 1600, in a specific implementation, the base station 1600 may further include:

a replacing unit 1603, configured to: if nB is greater than T/M, during calculation of the trunking paging cycle, replace a value of nB in N = min(T, nB) with T/M, where M is a paging cycle modification parameter preset by both the user equipment 1400 and the base station; or during calculation of the trunking paging cycle, replace a value of nB in N = min(T, nB) with 10 ms.

In the base station provided by the embodiment of the present invention, the presetting unit 1601 first presets a relation for calculating a paging frame SFN; and the processing unit 1602 sends, in a paging frame using N as a paging cycle, group paging to the user equipment. Because N is set to the minimum value of the default paging cycle T broadcast by the cell where the user equipment is located and nB, the paging cycle may be shortened, and initial call latency in trunking communication may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

As shown in FIG. 17, another base station 1700 provided by an embodiment of the present invention includes: a transceiver unit 1701 and a processing unit 1702.

The transceiver unit 1701 is configured to send a paging cycle modification parameter to a user equipment, where the paging cycle modification parameter is used to indicate that a default paging cycle T broadcast by a cell where the user equipment is located is modified to a paging cycle T/M, where M is a non-zero natural number.

The processing unit 1702 is configured to send group paging to the user equipment, where a paging frame SFN used in the group paging sent by the base station to the user equipment satisfies the following relation:

$$SFN \bmod (T/M) = ((T/M) \operatorname{div} N) * (UE\_ID \bmod N),$$

where, the number N of paging frames in the paging cycle is min(T/M, nB), where T indicates the default paging cycle broadcast by the cell where the user equipment is located, and UE_ID = G-ID mod 1024, where G-ID indicates a group identifier of a group that the user equipment joins, nB is a paging density related parameter whose value is set to one of 4T, 2T, T, T/2, T/4, T/8, T/17, and T/32, and M is the paging cycle modification parameter.

For the transceiver unit 1701, in an implementation manner, the transceiver unit 1701 is specifically configured to broadcast, through system information block type 2 carrying paging cycle modification parameters M, nB, and T, the paging cycle modification parameters to the user equipment.

In the base station provided by the embodiment of the present invention, the transceiver unit 1701 sends a paging cycle modification parameter to the user equipment, where the paging cycle modification parameter is used to indicate that the default paging cycle T broadcast by the cell where the user equipment is located is modified to a paging cycle T/M. Because the paging cycle is modified and shortened by M times, the paging cycle may be shortened. Because the group paging sent by the base station is received according to the paging cycle, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

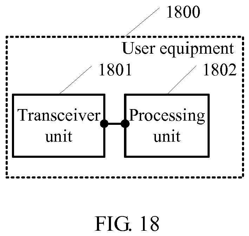

As shown in FIG. 18, another user equipment 1800 provided by an embodiment of the present invention includes: a transceiver unit 1801 and a processing unit 1802.

The transceiver unit 1801 is configured to receive a paging cycle modification parameter sent by a base station, where the paging cycle modification parameter is used to indicate that a default paging cycle T broadcast by a cell where the user equipment 1800 is located is modified to a paging cycle T/M, where M is a non-zero natural number.

The processing unit 1802 is configured to receive group paging sent by the base station. A paging frame SFN used in the group paging received by the processing unit 1802 from the base station satisfies the following relation:

$$\text{SFN mod } (T/M) = ((T/M) \text{ div } N) * (UE\_ID \text{ mod } N),$$

where, the number N of paging frames in the paging cycle is min(T/M, nB), where T indicates the default paging cycle broadcast by the cell where the user equipment is located, and UE_ID = G-ID mod 1024, where G-ID indicates a group identifier of a group that the user equipment joins, nB is a paging density related parameter whose value is set to one of 4T, 2T, T, T/2, T/4, T/8, T/16, and T/32, and M is the paging cycle modification parameter.

For the transceiver unit 1801, in an implementation manner, the transceiver unit 1801 is specifically configured to receive system information block type 2 broadcast by the base station, where the system information block type 2 carries paging cycle modification parameters, Nb, and T.

In the user equipment provided by the embodiment of the present invention, the transceiver unit 1801 receives a paging cycle modification parameter sent by the base station, where the paging cycle modification parameter is used to indicate that the default paging cycle T broadcast by the cell where the user equipment is located is modified to a paging cycle T/M. Because the paging cycle is modified and shortened by M times, the paging cycle may be shortened. Because the group paging sent by the base station is received according to the paging cycle, initial call latency of the user equipment may be reduced. In addition, because it is unnecessary to broadcast system information respectively to different users and different groups joined by the users, air interface resource overheads of the cell can be reduced, and utilization of radio resources can be improved. Because great modifications to the existing LTE system are not required, system compatibility is strong.

A person of ordinary skill in the art may understand that all or a part of the steps of the methods in the foregoing embodiments may be implemented by a program instructing relevant hardware. The program may be stored in a computer readable storage medium. The storage medium may be a read-only memory, a magnetic disk, or an optical disc.

Detailed above are a paging method and related device for trunking communication according to the present invention. With respect to the implementation and applicability of the present invention, modifications and variations may be made by a person of ordinary skill in the art according to the idea of the present invention. Therefore, the specification shall not be construed as a limitation on the present invention.

## Claims

1. A paging method for trunking communication, comprising:

   sending (101), by a user equipment, an information update request to a mobility management entity ,MME;
   receiving (102), by the user equipment, request response information, wherein the request response information comprises a group identifier of a group that the user equipment joins and a group specific discontinuous reception cycle preset by a trunking server;
   sending (103), by the user equipment, an information update complete message to the MME; and
   after the user equipment initiates a trunking service, using (104), by the user equipment, a minimum value of a default paging cycle broadcast by a cell where the user equipment is located and the group specific discontinuous reception cycle corresponding to the group identifier as a paging cycle, and receiving, according to the paging cycle, group paging sent by a base station.

2. The method according to claim 1, wherein the sending, by a user equipment, an information update request to a mobility management entity MME, comprises:

   when the user equipment is powered on, sending, by the user equipment, attach request information to the MME; or
   when a tracking area is updated, sending, by the user equipment, tracking area update request information to the MME.

3. The method according to claim 1 or 2, wherein the group specific discontinuous reception cycle comprises 10 x $2^i$ ms, wherein i is a natural number.

4. A paging method for trunking communication, comprising:

receiving (201), by a mobility management entity MME, an information update request sent by a user equipment;
obtaining (202), by the MME from a trunking server, a group identifier of a group that the user equipment joins and a group specific discontinuous reception cycle preset by the trunking server;
sending (203), by the MME, request response information to the user equipment, wherein the request response information comprises the group identifier of the group that the user equipment joins and the group specific discontinuous reception cycle preset by the trunking server;
receiving (204), by the MME, an information update complete message sent by the user equipment; and
when the user equipment initiates a trunking service, sending, by the MME, group paging information to a base station, wherein the group paging information comprises the group identifier corresponding to the user equipment and the group specific discontinuous reception cycle preset by the trunking server, for selecting a minimum value of a default paging cycle broadcast by a cell where the user equipment is located and the group specific discontinuous reception cycle corresponding to the group identifier as a paging cycle and for sending group paging to the user equipment according to the paging cycle.

5. The method according to claim 4, wherein the obtaining, by the MME from a trunking server, a group identifier of a group that the user equipment joins and a group specific discontinuous reception cycle preset by the trunking server, comprises:

forwarding, by the MME, a message of the user equipment for requesting trunking information from the trunking server; and
receiving, by the MME, parameter configuration information sent by the trunking server, wherein the parameter configuration information comprises the group identifier of the group that the user equipment joins and the group specific discontinuous reception cycle preset by the trunking server.

6. The method according to claim 5, wherein:
if the information update request received from the user equipment is an attach request, the sending, by the MME, request response information, comprises:

sending, by the MME, attach response information to the user equipment; or
if the information update request received from the user equipment is a tracking area update request, the sending, by the MME, request response information, comprises:
sending, by the MME, tracking area update accept information to the user equipment.

7. A paging method for trunking communication, comprising:

generating (301), by a trunking server, a group specific discontinuous reception cycle for a user equipment;
receiving (302), by the trunking server, a message of the user equipment for requesting trunking information from the trunking server, wherein the message is forwarded by a mobility management entity ,MME; and
sending (303), by the trunking server, parameter configuration information to the MME, wherein the parameter configuration information comprises a group identifier of a group that the user equipment joins and the group specific discontinuous reception cycle preset by the trunking server.

8. The method according to claim 7, wherein the group specific discontinuous reception cycle generated by the trunking server comprises $10 \times 2^i$ ms, wherein i is a natural number.

9. A user equipment, comprising a transceiver unit (1101) and a processing unit (1102), wherein:

the transceiver unit (1101) is configured to send an information update request to a mobility management entity , MME;
the transceiver unit (1101) is configured to receive request response information, wherein the request response information comprises a group identifier of a group that the user equipment joins and a group specific discontinuous reception cycle preset by a trunking server;
the transceiver unit (1101) is configured to send an information update complete message to the MME; and
the processing unit (1102) is configured to: after the user equipment initiates a trunking service, use a minimum value of a default paging cycle broadcast by a cell where the user equipment is located and the group specific discontinuous reception cycle corresponding to the group identifier received by the transceiver unit (1101) as a paging cycle, and receive, according to the paging cycle, group paging sent by a base station.

**10.** The user equipment according to claim 9, wherein the transceiver unit (1101) is specifically configured to:

> send attach request information to the MME when the user equipment is powered on; or
> send tracking area update request information to the MME when a tracking area is updated.

**11.** The user equipment according to claim 9 or 10, wherein the group specific discontinuous reception cycle in the request response information received by the transceiver unit (1101) comprises: $10 \times 2^i$ ms, wherein i is a natural number.

**12.** A mobility management entity, comprising a transceiver unit (1201), an obtaining unit (1202), and a processing unit (1203), wherein:

> the transceiver unit (1201) is configured to receive an information update request sent by a user equipment;
> the obtaining unit (1202) is configured to obtain, from a trunking server, a group identifier of a group that the user equipment joins and a group specific discontinuous reception cycle preset by the trunking server;
> the transceiver unit (1201) is configured to send request response information to the user equipment, wherein the request response information comprises the group identifier of the group that the user equipment joins and the group specific discontinuous reception cycle preset by the trunking server;
> the transceiver unit (1201) is configured to receive an information update complete message sent by the user equipment; and
> the processing unit (1203) is configured to send group paging information to a base station when the user equipment initiates a trunking service, wherein the group paging information comprises the group identifier of the group that the user equipment joins and the group specific discontinuous reception cycle preset by the trunking server, for selecting a minimum value of a default paging cycle broadcast by a cell where the user equipment is located and the group specific discontinuous reception cycle corresponding to the group identifier received by the transceiver unit (1201) as a paging cycle and for sending group paging to the user equipment according to the paging cycle.

**13.** The mobility management entity according to claim 12, wherein the obtaining unit (1202) is specifically configured to:

> forward a message of the user equipment for requesting trunking information from the trunking server; and
> receive parameter configuration information sent by the trunking server, wherein the parameter configuration information comprises the group identifier of the group that the user equipment joins and the group specific discontinuous reception cycle preset by the trunking server.

**14.** A trunking server, comprising a generating unit (1301) and a transceiver unit (1302), wherein:

> the generating unit (1301) is configured to generate a group specific discontinuous reception cycle for a user equipment;
> the transceiver unit (1302) is configured to receive a message of the user equipment for requesting trunking information from the trunking server, wherein the message is forwarded by a mobility management entity ,MME; and
> the transceiver unit (1302) is configured to send parameter configuration information to the MME, wherein the parameter configuration information comprises a group identifier of a group that the user equipment joins and the group specific discontinuous reception cycle preset by the trunking server.

**15.** The trunking server according to claim 14, wherein the group specific discontinuous reception cycle generated by the generating unit (1301) comprises $10 \times 2^i$ ms, wherein i is a natural number.

**16.** A system for trunking communication, comprising a user equipment (1401) according to one of the claims 9 to 11, a base station (1402), a mobility management entity (1403) according to claim 12 or 13, and a trunking server (1404) according to claim 14 or 15.

**Patentansprüche**

**1.** Paging-Verfahren für die "Trunking"-Kommunikation, Folgendes umfassend:

Senden (101), durch ein Benutzergerät, einer Informationsaktualisierungsanfrage an eine Mobilitätsmanagementeinheit, MME;

Empfangen (102), durch das Benutzergerät, einer Anfrage-Antwort-Information, wobei die Anfrage-Antwort-Information eine Gruppenkennung einer Gruppe, welcher sich das Benutzergerät anschließt, sowie einen gruppenspezifischen diskontinuierlichen Empfangszyklus, der von einem "Trunking"-Server voreingestellt ist, umfasst;

Senden (103), durch das Benutzergerät, einer Informationsaktualisierung-fertiggestellt-Nachricht an die MME; und

nachdem das Benutzergerät einen "Trunking"-Dienst initiiert, Verwenden (104), durch das Benutzergerät, eines Mindestwerts eines von einer Zelle, wo sich das Benutzergerät befindet, gesendeten Standard-Paging-Zyklus und des gruppenspezifischen diskontinuierlichen Empfangszyklus, der mit der Gruppenkennung in Beziehung steht, als ein Paging-Zyklus, und Empfangen, entsprechend dem Paging-Zyklus, eines von einer Basisstation gesendeten Gruppen-Paging.

2. Verfahren nach Anspruch 1, wobei das Senden einer Informationsaktualisierungsanfrage, durch ein Benutzergerät, an eine Mobilitätsmanagementeinheit, MME, Folgendes umfasst:

wenn das Benutzergerät eingeschaltet ist, Senden einer Verbindungsanfrageinformation, durch das Benutzergerät, an die MME; oder

wenn ein "Tracking"-Bereich aktualisiert wird, Senden, durch das Benutzergerät, einer "Tracking"-Bereichsaktualisierungsanfrage an die MME.

3. Verfahren nach Anspruch 1 oder 2, wobei der gruppenspezifische diskontinuierliche Empfangszyklus $10 \times 2^i$ ms umfasst, wobei i eine natürliche Zahl ist.

4. Paging-Verfahren für die "Trunking"-Kommunikation, Folgendes umfassend:

Empfangen (201) einer von einem Benutzergerät gesendeten Informationsaktualisierungsanfrage durch eine Mobilitätsmanagementeinheit, MME;

Erlangen (202), durch die MME von einem "Trunking"-Server, einer Gruppenkennung einer Gruppe, welcher sich das Benutzergerät anschließt, sowie eines gruppenspezifischen diskontinuierlichen Empfangszyklus, der vom "Trunking"-Server voreingestellt ist;

Senden (203), durch die MME, einer Anfrage-Antwort-Information an das Benutzergerät, wobei die Anfrage-Antwort-Information die Gruppenkennung der Gruppe, welcher sich das Benutzergerät anschließt, sowie den gruppenspezifischen diskontinuierlichen Empfangszyklus, der vom "Trunking"-Server voreingestellt ist, umfasst;

Empfangen (204), durch die MME, einer vom Benutzergerät gesendeten Informationsaktualisierung-fertiggestellt-Nachricht; und

wenn das Benutzergerät einen "Trunking"-Dienst initiiert, Senden, durch die MME, von Gruppen-Paging-Information an eine Basisstation, wobei die Gruppen-Paging-Information die Gruppenkennung, die mit dem Benutzergerät in Beziehung steht, und den gruppenspezifischen diskontinuierlichen Empfangszyklus, der vom "Trunking"-Server voreingestellt ist, umfasst, um einen Mindestwert eines von einer Zelle, wo sich das Benutzergerät befindet, gesendeten Standard-Paging-Zyklus und des gruppenspezifischen diskontinuierlichen Empfangszyklus, der mit der Gruppenkennung in Beziehung steht, als einen Paging-Zyklus auszuwählen, und um Gruppen-Paging an das Benutzergerät entsprechend dem Paging-Zyklus zu senden.

5. Verfahren nach Anspruch 4, wobei das Erlangen, durch die MME von einem "Trunking"-Server, einer Gruppenkennung einer Gruppe, welcher sich das Benutzergerät anschließt, sowie eines gruppenspezifischen diskontinuierlichen Empfangszyklus, der vom "Trunking"-Server voreingestellt ist, Folgendes umfasst; Übermitteln, durch die MME, einer Nachricht des Benutzergeräts zur Anforderung von "Trunking"-Information vom "Trunking"-Server; und Empfangen, durch die MME, von durch den "Trunking"-Server gesendeter Parameterkonfigurationsinformation, wobei die Parameterkonfigurationsinformation die Gruppenkennung der Gruppe, welcher sich das Benutzergerät anschließt, sowie den gruppenspezifischen diskontinuierlichen Empfangszyklus, der vom "Trunking"-Server voreingestellt ist, umfasst.

6. Verfahren nach Anspruch 5, wobei:
wenn die vom Benutzergerät empfangene Informationsaktualisierungsanfrage eine Verbindungsanfrage ist, das Senden von Anfrage-Antwort-Information durch die MME Folgendes umfasst:

Senden, durch die MME, von Verbindungsantwortinformation an das Benutzergerät; oder

wenn die vom Benutzergerät empfangene Informationsaktualisierungsanfrage eine "Tracking"-Bereichsaktualisierungsanfrage ist, das Senden von Anfrage-Antwort-Information durch die MME Folgendes umfasst:

Senden, durch die MME, von "Tracking"-Bereichsaktualisierungsannahmeinformation an das Benutzergerät.

**7.** Paging-Verfahren für die "Trunking"-Kommunikation, Folgendes umfassend:

Generieren (301), durch einen "Trunking"-Server, eines gruppenspezifischen diskontinuierlichen Empfangszyklus für ein Benutzergerät;

Empfangen (302), durch den "Trunking"-Server, einer Nachricht des Benutzergeräts zur Anforderung von "Trunking"-Information vom "Trunking"-Server, wobei die Nachricht von einer Mobilitätsmanagementeinheit, MME, wird; und

Senden (303), durch den "Trunking"-Server, von Parameterkonfigurationsinformation an die MME, wobei die Parameterkonfigurationsinformation eine Gruppenkennung einer Gruppe, welcher sich das Benutzergerät anschließt, sowie den gruppenspezifischen diskontinuierlichen Empfangszyklus, der vom "Trunking"-Server voreingestellt ist, umfasst.

**8.** Verfahren nach Anspruch 7, wobei der vom "Trunking"-Server generierte gruppenspezifische diskontinuierliche Empfangszyklus $10 \times 2^i$ ms umfasst, wobei i eine natürliche Zahl ist.

**9.** Benutzergerät, welches eine Sender-Empfänger-Einheit (1101) und eine Verarbeitungseinheit (1102) umfasst, wobei:

die Sender-Empfänger-Einheit (1101) dafür eingerichtet ist, eine Informationsaktualisierungsanfrage an eine Mobilitätsmanagementeinheit, MME, zu senden;

die Sender-Empfänger-Einheit (1101) dafür eingerichtet ist, Anfrage-Antwort-Information zu empfangen, wobei die Anfrage-Antwort-Information eine Gruppenkennung einer Gruppe, welcher sich das Benutzergerät anschließt, sowie einen gruppenspezifischen diskontinuierlichen Empfangszyklus, der von einem "Trunking"-Server voreingestellt ist, umfasst;

die Sender-Empfänger-Einheit (1101) dafür eingerichtet ist, eine Informationsaktualisierung-fertiggestellt-Nachricht an die MME zu senden; und

die Verarbeitungseinheit (1102) für Folgendes eingerichtet ist: nachdem das Benutzergerät einen "Trunking"-Dienst initiiert, Verwenden eines Mindestwerts eines von einer Zelle, wo sich das Benutzergerät befindet, gesendeten Standard-Paging-Zyklus und des gruppenspezifischen diskontinuierlichen Empfangszyklus, der mit der von der Sender-Empfänger-Einheit (1101) empfangenen Gruppenkennung in Beziehung steht, als ein Paging-Zyklus, und Empfangen, entsprechend dem Paging-Zyklus, eines von einer Basisstation gesendeten Gruppen-Paging.

**10.** Benutzergerät nach Anspruch 9, wobei die Sender-Empfänger-Einheit (1101) im Besonderen für Folgendes eingerichtet ist:

Senden von Verbindungsanfrageinformation an die MME, wenn das Benutzergerät eingeschaltet ist; oder Senden einer "Tracking"-Bereichsaktualisierungsanfrage an die MME, wenn ein "Tracking"-Bereich aktualisiert wird.

**11.** Benutzergerät nach Anspruch 9 oder 10, wobei der gruppenspezifische diskontinuierliche Empfangszyklus in der von der Sender-Empfänger-Einheit (1101) empfangenen Anfrage-Antwort-Information Folgendes umfasst: $10 \times 2^i$ ms, wobei i eine natürliche Zahl ist.

**12.** Mobilitätsmanagementeinheit, welche eine Sender-Empfänger-Einheit (1201), eine Beschaffungseinheit (1202) und eine Verarbeitungseinheit (1203) umfasst, wobei:

die Sender-Empfänger-Einheit (1201) dafür eingerichtet ist, eine von einem Benutzergerät gesendete Informationsaktualisierungsanfrage zu empfangen;

die Beschaffungseinheit (1202) dafür eingerichtet ist, von einem "Trunking"-Server eine Gruppenkennung einer Gruppe, welcher sich das Benutzergerät anschließt, sowie einen gruppenspezifischen diskontinuierlichen Empfangszyklus, der vom "Trunking"-Server voreingestellt ist, zu erlangen;

die Sender-Empfänger-Einheit (1201) dafür eingerichtet ist, Anfrage-Antwort-Information an das Benutzergerät zu senden, wobei die Anfrage-Antwort-Information die Gruppenkennung der Gruppe, welcher sich das Benutzergerät anschließt, sowie den gruppenspezifischen diskontinuierlichen Empfangszyklus, der vom "Trunking"-Server voreingestellt ist, umfasst;

die Sender-Empfänger-Einheit (1201) dafür eingerichtet ist, eine vom Benutzergerät gesendete Informationsaktualisierung-fertiggestellt-Nachricht zu empfangen; und

die Verarbeitungseinheit (1203) dafür eingerichtet ist, Gruppen-Paging-Information an eine Basisstation zu senden, wenn das Benutzergerät einen "Trunking"-Dienst initiiert, wobei die Gruppen-Paging-Information die Gruppenkennung der Gruppe, der sich das Benutzergerät anschließt, und den gruppenspezifischen diskontinuierlichen Empfangszyklus, der vom "Trunking"-Server voreingestellt ist, umfasst, um einen Mindestwert eines von einer Zelle, wo sich das Benutzergerät befindet, gesendeten Standard-Paging-Zyklus und des gruppenspezifischen diskontinuierlichen Empfangszyklus, der mit der von der Sender-Empfänger-Einheit (1201) empfangenen Gruppenkennung in Beziehung steht, als einen Paging-Zyklus auszuwählen, und um Gruppen-Paging an das Benutzergerät entsprechend dem Paging-Zyklus zu senden.

13. Mobilitätsmanagementeinheit nach Anspruch 12, wobei die Beschaffungseinheit (1202) im Besonderen für Folgendes eingerichtet ist:

Übermitteln einer Nachricht des Benutzergeräts zur Anforderung von "Trunking"-Information vom "Trunking"-Server; und

Empfangen von durch den "Trunking"-Server gesendeter Parameterkonfigurationsinformation, wobei die Parameterkonfigurationsinformation die Gruppenkennung der Gruppe, welcher sich das Benutzergerät anschließt, sowie den gruppenspezifischen diskontinuierlichen Empfangszyklus, der vom "Trunking"-Server voreingestellt ist, umfasst.

14. "Trunking"-Server, welcher eine Generierungseinheit (1301) und eine Sender-Empfänger-Einheit (1302) umfasst, wobei:

die Generierungseinheit (1301) dafür eingerichtet ist, einen gruppenspezifischen diskontinuierlichen Empfangszyklus für ein Benutzergerät zu generieren;

die Sender-Empfänger-Einheit (1302) dafür eingerichtet ist, eine Nachricht des Benutzergeräts zur Anforderung von "Trunking"-Information vom "Trunking"-Server zu empfangen, wobei die Nachricht von einer Mobilitätsmanagementeinheit, MME, übermittelt wird; und

die Sender-Empfänger-Einheit (1302) dafür eingerichtet ist, Parameterkonfigurationsinformation an die MME zu senden, wobei die Parameterkonfigurationsinformation eine Gruppenkennung einer Gruppe, welcher sich das Benutzergerät anschließt, sowie den gruppenspezifischen diskontinuierlichen Empfangszyklus, der vom "Trunking"-Server voreingestellt ist, umfasst.

15. "Trunking"-Server nach Anspruch 14, wobei der von der Generierungseinheit (1301) generierte gruppenspezifische diskontinuierliche Empfangszyklus $10 \times 2^i$ ms umfasst, wobei i eine natürliche Zahl ist.

16. System für die "Trunking"-Kommunikation, welches ein Benutzergerät (1401) nach einem der Ansprüche 9 bis 11, eine Basisstation (1402), eine Mobilitätsmanagementeinheit (1403) nach Anspruch 12 oder 13, sowie einen "Trunking"-Server (1404) nach Anspruch 14 oder 15 umfasst.

## Revendications

1. Procédé de radiomessagerie pour communication de jonction, comportant :

l'envoi (101), par un équipement d'utilisateur, d'une demande d'actualisation d'informations à une entité de gestion de mobilité, MME ;
la réception (102), par l'équipement d'utilisateur, d'informations de réponse à la demande, les informations de réponse à la demande comportant un identifiant de groupe d'un groupe que l'équipement d'utilisateur rejoint et un cycle de réception discontinue spécifique au groupe, préétabli par un serveur de jonction ;
l'envoi (103), par l'équipement d'utilisateur, d'un message d'achèvement d'actualisation d'informations à la MME ; et
après que l'équipement d'utilisateur a lancé un service de jonction, l'utilisation (104), par l'équipement d'utilisateur, d'une valeur minimale d'un cycle de radiomessagerie par défaut diffusé par une cellule où est situé l'équipement d'utilisateur et du cycle de réception discontinue spécifique au groupe correspondant à l'identifiant de groupe en tant que cycle de radiomessagerie, et la réception, selon le cycle de radiomessagerie, d'une radiomessagerie de groupe émise par une station de base.

2. Procédé selon la revendication 1, l'envoi, par un équipement d'utilisateur, d'une demande d'actualisation d'informations à une entité de gestion de mobilité, MME, comportant :

lorsque l'équipement d'utilisateur est mis sous tension, l'envoi, par l'équipement d'utilisateur, d'informations de demande de rattachement à la MME ; ou
lorsqu'une zone de suivi est actualisée, l'envoi, par l'équipement d'utilisateur, d'informations de demande d'actualisation de zone de suivi à la MME.

3. Procédé selon la revendication 1 ou 2, le cycle de réception discontinue spécifique au groupe comprenant $10 \times 2^i$ ms, i étant un entier naturel.

4. Procédé de radiomessagerie pour communication de jonction, comportant :

la réception (201), par une entité de gestion de mobilité MME, d'une demande d'actualisation d'informations émise par un équipement d'utilisateur ;
l'obtention (202), par la MME à partir d'un serveur de jonction, d'un identifiant de groupe d'un groupe que l'équipement d'utilisateur rejoint et d'un cycle de réception discontinue spécifique au groupe, préétabli par le serveur de jonction ;
l'envoi (203), par la MME, d'informations de réponse à la demande à l'équipement d'utilisateur, les informations de réponse à la demande comportant l'identifiant de groupe du groupe que l'équipement d'utilisateur rejoint et le cycle de réception discontinue spécifique au groupe, préétabli par le serveur de jonction ;
la réception (204), par la MME, d'un message d'achèvement d'actualisation d'informations émis par l'équipement d'utilisateur ; et
lorsque l'équipement d'utilisateur lance un service de jonction, l'envoi, par la MME, d'informations de radiomessagerie de groupe à une station de base, les informations de radiomessagerie de groupe comportant l'identifiant de groupe correspondant à l'équipement d'utilisateur et le cycle de réception discontinue spécifique au groupe, préétabli par le serveur de jonction, pour sélectionner une valeur minimale d'un cycle de radiomessagerie par défaut diffusé par une cellule où est situé l'équipement d'utilisateur et le cycle de réception discontinue spécifique au groupe correspondant à l'identifiant de groupe en tant que cycle de radiomessagerie et pour envoyer une radiomessagerie de groupe à l'équipement d'utilisateur selon le cycle de radiomessagerie.

5. Procédé selon la revendication 4, l'obtention, par la MME à partir d'un serveur de jonction, d'un identifiant de groupe d'un groupe que l'équipement d'utilisateur rejoint et d'un cycle de réception discontinue spécifique au groupe, préétabli par le serveur de jonction, comportant :

le transfert, par la MME, d'un message de l'équipement d'utilisateur servant à demander des informations de jonction au serveur de jonction ; et
la réception, par la MME, d'informations de configuration de paramètres émises par le serveur de jonction, les informations de configuration de paramètres comportant l'identifiant de groupe du groupe que l'équipement d'utilisateur rejoint et le cycle de réception discontinue spécifique au groupe, préétabli par le serveur de jonction.

6. Procédé selon la revendication 5 :
l'envoi, par la MME, des informations de réponse à la demande comportant, si la demande d'actualisation d'informations reçue en provenance de l'équipement d'utilisateur est une demande de rattachement :

l'envoi, par la MME, d'informations de réponse de rattachement à l'équipement d'utilisateur ; ou
l'envoi, par la MME, des informations de réponse à la demande comportant, si la demande d'actualisation d'informations reçue en provenance de l'équipement d'utilisateur est une demande d'actualisation de zone de suivi :
l'envoi, par la MME, d'informations d'acceptation d'actualisation de zone de suivi à l'équipement d'utilisateur.

7. Procédé de radiomessagerie pour communication de jonction, comportant :

la génération (301), par un serveur de jonction, d'un cycle de réception discontinue spécifique au groupe pour un équipement d'utilisateur ;

la réception (302), par le serveur de jonction, d'un message de l'équipement d'utilisateur servant à demander des informations de jonction au serveur de jonction, le message étant transféré par une entité de gestion de mobilité, MME ; et

l'envoi (303), par le serveur de jonction, d'informations de configuration de paramètres à la MME, les informations de configuration de paramètres comportant un identifiant de groupe d'un groupe que l'équipement d'utilisateur rejoint et le cycle de réception discontinue spécifique au groupe, préétabli par le serveur de jonction.

8. Procédé selon la revendication 7, le cycle de réception discontinue spécifique au groupe généré par le serveur de jonction comportant $10 \times 2^i$ ms, i étant un entier naturel.

9. Équipement d'utilisateur, comportant une unité (1101) d'émetteur-récepteur et une unité (1102) de traitement :

l'unité (1101) d'émetteur-récepteur étant configurée pour envoyer une demande d'actualisation d'informations à une entité de gestion de mobilité, MME ;

l'unité (1101) d'émetteur-récepteur étant configurée pour recevoir des informations de réponse à la demande, les informations de réponse à la demande comportant un identifiant de groupe d'un groupe que l'équipement d'utilisateur rejoint et un cycle de réception discontinue spécifique au groupe, préétabli par un serveur de jonction ;

l'unité (1101) d'émetteur-récepteur étant configurée pour envoyer un message d'achèvement d'actualisation d'informations à la MME ; et

l'unité (1102) de traitement étant configurée pour: après que l'équipement d'utilisateur a lancé un service de jonction, utiliser une valeur minimale d'un cycle de radiomessagerie par défaut diffusé par une cellule où est situé l'équipement d'utilisateur et le cycle de réception discontinue spécifique au groupe correspondant à l'identifiant de groupe reçu par l'unité (1101) d'émetteur-récepteur en tant que cycle de radiomessagerie, et recevoir, selon le cycle de radiomessagerie, une radiomessagerie de groupe émise par une station de base.

10. Équipement d'utilisateur selon la revendication 9, l'unité (1101) d'émetteur-récepteur étant spécifiquement configurée pour :

envoyer des informations de demande de rattachement à la MME lorsque l'équipement d'utilisateur est mis sous tension ; ou

envoyer des informations de demande d'actualisation de zone de suivi à la MME lorsqu'une zone de suivi est actualisée.

11. Équipement d'utilisateur selon la revendication 9 ou 10, le cycle de réception discontinue spécifique au groupe figurant dans les informations de réponse à la demande reçues par l'unité (1101) d'émetteur-récepteur comportant : $10 \times 2^i$ ms, i étant un entier naturel.

12. Entité de gestion de mobilité, comportant une unité (1201) d'émetteur-récepteur, une unité (1202) d'obtention, et une unité (1203) de traitement :

l'unité (1201) d'émetteur-récepteur étant configurée pour recevoir une demande d'actualisation d'informations émise par un équipement d'utilisateur ;

l'unité (1202) d'obtention étant configurée pour obtenir, à partir d'un serveur de jonction, un identifiant de groupe d'un groupe que l'équipement d'utilisateur rejoint et un cycle de réception discontinue spécifique au groupe, préétabli par le serveur de jonction ;

l'unité (1201) d'émetteur-récepteur étant configurée pour envoyer des informations de réponse à la demande à l'équipement d'utilisateur, les informations de réponse à la demande comportant l'identifiant de groupe du groupe que l'équipement d'utilisateur rejoint et le cycle de réception discontinue spécifique au groupe, préétabli par le serveur de jonction ;

l'unité (1201) d'émetteur-récepteur étant configurée pour recevoir un message d'achèvement d'actualisation d'informations émis par l'équipement d'utilisateur ; et

l'unité (1203) de traitement étant configurée pour envoyer des informations de radiomessagerie de groupe à une station de base lorsque l'équipement d'utilisateur lance un service de jonction, les informations de radiomessagerie de groupe comportant l'identifiant de groupe du groupe que l'équipement d'utilisateur rejoint et le cycle de réception discontinue spécifique au groupe, préétabli par le serveur de jonction, pour sélectionner une valeur minimale d'un cycle de radiomessagerie par défaut diffusé par une cellule où est situé l'équipement d'utilisateur et le cycle de réception discontinue spécifique au groupe correspondant à l'identifiant de groupe reçu par l'unité (1201) d'émetteur-récepteur en tant que cycle de radiomessagerie et pour envoyer une radiomessagerie de groupe à l'équipement d'utilisateur selon le cycle de radiomessagerie.

13. Entité de gestion de mobilité selon la revendication 12, l'unité (1202) d'obtention étant spécifiquement configurée pour :

transférer un message de l'équipement d'utilisateur servant à demander des informations de jonction au serveur de jonction ; et
recevoir des informations de configuration de paramètres émises par le serveur de jonction, les informations de configuration de paramètres comportant l'identifiant de groupe du groupe que l'équipement d'utilisateur rejoint et le cycle de réception discontinue spécifique au groupe, préétabli par le serveur de jonction.

14. Serveur de jonction, comportant une unité (1301) de génération et une unité (1302) d'émetteur-récepteur :

l'unité (1301) de génération étant configurée pour générer un cycle de réception discontinue spécifique au groupe pour un équipement d'utilisateur ;
l'unité (1302) d'émetteur-récepteur étant configurée pour recevoir un message de l'équipement d'utilisateur servant à demander des informations de jonction au serveur de jonction, le message étant transféré par une entité de gestion de mobilité, MME ; et
l'unité (1302) d'émetteur-récepteur étant configurée pour envoyer des informations de configuration de paramètres à la MME, les informations de configuration de paramètres comportant un identifiant de groupe d'un groupe que l'équipement d'utilisateur rejoint et le cycle de réception discontinue spécifique au groupe, préétabli par le serveur de jonction.

15. Serveur de jonction selon la revendication 14, le cycle de réception discontinue spécifique au groupe généré par l'unité (1301) de génération comportant $10 \times 2^i$ ms, i étant un entier naturel.

16. Système pour communication de jonction, comportant un équipement (1401) d'utilisateur selon l'une des revendications 9 à 11, une station (1402) de base, une entité (1403) de gestion de mobilité selon la revendication 12 ou 13, et un serveur (1404) de jonction selon la revendication 14 ou 15.

A user equipment sends an information update request to a mobility management entity — 101

The user equipment receives request response information — 102

The user equipment sends an information update complete message to the mobility management entity — 103

After the user equipment initiates a trunking service, the user equipment uses a minimum value of the default paging cycle broadcast by the cell where the user equipment is located and the group specific discontinuous reception cycle corresponding to the group identifier as a paging cycle, and receives, according to the paging cycle, group paging sent by the base station — 104

FIG. 1

A mobility management entity receives an information update request sent by a user equipment — 201

The mobility management entity obtains, from a trunking server, a group identifier of a group that the user equipment joins and a group specific discontinuous reception cycle preset by the trunking server — 202

The mobility management entity sends request response information to the user equipment — 203

When the user equipment initiates a trunking service, the mobility management entity sends group paging information to a base station — 204

FIG. 2

A trunking server generates a group specific discontinuous reception cycle for a user equipment — 301

The trunking server receives a message of the user equipment for requesting trunking information from the trunking server, where the message is forwarded by a mobility management entity — 302

The trunking server sends parameter configuration information to the mobility management entity — 303

FIG. 3

The paging cycle of the
trunking UE is 40 ms

o
fram
ᴖ

| 0 | 1 | 2 | 3 | 4 | 5 | 6 | | | | ... ... | 16 | ... ... |

The paging cycle of the non-trunking UE is 160 ms

FIG. 4

A user equipment presets a relation for calculating a
paging frame SFN:
SFN mod N = UE_ID mod N
/ 501

After the user equipment initiates a trunking
service, the user equipment receives group paging
sent by the base station
/ 502

FIG. 5

The paging cycle of the
trunking UE is 40 ms

o
fram
ᴖ

| 0 | 1 | 2 | 3 | 4 | 5 | 6 | 7 | 8 | 9 | ... ... | 31 | ... ... |

The paging cycle of the non-trunking UE is 320 ms

FIG. 6

A base station presets a relation for calculating a
paging frame SFN:
SFN mod N = UE_ID mod N

701

The base station sends group paging to the user
equipment

702

FIG. 7

A base station sends a paging cycle modification
parameter to a user equipment

801

The base station sends group paging to the user
equipment

802

FIG. 8

The paging cycle of the
trunking UE is 40 ms

o
fram
e

| 0 | 1 | 2 | 3 | 4 | 5 | 6 | 7 | ··· ··· | 20 | ··· ··· | 31 | ··· ··· |

The paging cycle of the non-trunking UE is 320 ms

FIG. 9

FIG. 10

FIG. 11

FIG. 12

1300

Trunking server

1301          1302

| Generating unit | Transceiver unit |

FIG. 13

1400

System for trunking communication

140
1          1402

| User equipme nt | Base station | Mobility manageme nt entity | 140
3 |

1404

Trunking server

FIG. 14

FIG. 15

FIG. 16

FIG. 17

1800

User equipment

1801          1802

| Transceiver unit | Processing unit |

FIG. 18

**EP 2 753 105 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1968226 A1
- US 2010022257 A1